# EUROPEAN PATENT SPECIFICATION

(11) **EP 4 677 997 B1**
(45) Date of publication and mention of the grant of the patent: **01.07.2026**
(21) Application number: 25188347.6
(22) Date of filing: 09.07.2025
(51) Int. Cl.: A01G 31/02

(54) **A PLATFORM FOR CULTIVATING PLANTS ON THE SURFACE OF WATER AND A METHOD FOR CULTIVATING PLANTS**
PLATTFORM ZUR KULTIVIERUNG VON PFLANZEN AUF DER WASSEROBERFLÄCHE UND VERFAHREN ZUR KULTIVIERUNG VON PFLANZEN
PLATE-FORME POUR CULTIVER DES PLANTES À LA SURFACE DE L'EAU ET PROCÉDÉ POUR CULTIVER DES PLANTES

(30) Priority: 09.07.2024 PL 44917324
(43) Date of publication of application: 14.01.2026
(73) Proprietor: Kolbusz, Jan, 31-920 Krakow (PL)
(72) Inventor: Kolbusz, Jan, 31-920 Krakow (PL)
(74) Representative: Kancelaria Eupatent.pl Sp. z o.o.

(56) References cited:
- CN-U- 203 735 202
- CN-U- 208 762 240
- JP-A- H11 164 630
- US-B1- 11 425 870

## Description

### TECHNICAL FIELD

The present invention relates to a platform for cultivating plants on the surface of water, and to a method of cultivating plants using this platform. The solution is particularly suitable for cultivating plants on bodies of water and watercourses contaminated with nutrients. These plants capture pollutants from the water, thereby improving water quality.

### BACKGROUND

The cultivation of plants on the surface of water bodies and watercourses has been known since prehistoric times, and numerous solutions have been developed to enhance this process. Increasingly, cultivating plants on the water's surface is utilized as a method for water purification, particularly for the removal of nitrogen, phosphorus, and other biogenic elements. This process involves plants absorbing nutrients from the water, which improves its quality. In return, the plants generate valuable biomass while simultaneously absorbing atmospheric CO₂. This is particularly important given the current issues with surface water pollution and the progressive increase in atmospheric CO₂ concentrations.

Known prior art includes platforms and devices specifically designed for cultivating plants on the surface of water. Such systems, commonly referred to as floating hydroponics or aquaponics, employ floating platforms on which plants grow. The roots of these plants are directly submerged in water, enabling them to absorb nutrients straight from the aquatic environment.

Among the most recognized solutions in this area are "floating island" systems, which utilize lightweight, floating plastic platforms for plant growth. These platforms are typically anchored in place, although some are mobile. Plants on these platforms are nourished by the water in which they float, with their roots immersed directly in the water to draw nutrients. Other systems integrate fish farming with plant cultivation on floating platforms, where waste produced by fish is converted by bacteria into nutrients beneficial for the plants. In turn, plants help purify the water for the fish. However, these solutions carry disadvantages, such as planting plants individually in nests or soil-like substrates, which lengthens the planting process, and harvesting plants (including their roots), which can damage or even destroy the platforms.

US20070209277A1 describes a floating raft comprising a floating raft body with an attached biodegradable mat. The raft body is made of closed-cell polyethylene foam, and the mat can be woven from coconut fiber. The mat covers the raft body and fills the open space, providing a surface for aquatic plant growth. These plants consume nutrients from the underlying water. However, this solution presents some difficulties when placing new plants onto the raft and during harvesting, as it requires the replacement of the biodegradable mat when reused. Additionally, this structure is not particularly suitable for starting cultivation from rootable plant propagules, such as rhizomes, roots, stems, or branches.

US11290054B2 discloses a floating platform designed specifically for mounting photovoltaic panels, offering high strength and buoyancy even at low weight. It can stably support photovoltaic panels on water, including in wavy conditions. However, this structure is not configured for plant cultivation. Further floating platforms are disclosed in CN 208 762 240 U, US 11 425 870 B1, CN 203 735 202 U and JP H11 164630 A.

Notably, existing solutions rely heavily on specially manufactured plastic components specifically produced for these platforms. Furthermore, harvesting and replanting necessitate replacing parts such as mats that attach the plants. Existing solutions are also not optimal for use as starting platforms for cultivating rootable plant propagules, such as rhizomes, roots, stems, or branches.

### SUMMARY OF THE INVENTION

The aim of the present invention is to develop an alternative platform for cultivating plants on the water surface that is constructed from commonly available structural components, thus simplifying production. It would also be advantageous for such a platform to be optimally suited as a base for cultivating rootable plant propagules, such as rhizomes, roots, stems, or branches, allowing easy removal and introduction of plants without the risk of damaging or needing to replace any components.

In one aspect, the invention is defined by claim 1, which simplifies the placement and harvesting of plants.

This structural innovation simplifies both the assembly and operational usage of the platform by utilizing widely available components. It overcomes limitations associated with existing solutions by allowing effortless installation and removal of plant propagules without damaging or necessitating replacement of structural elements. Moreover, this adaptability significantly enhances the ease of handling plants, improving cultivation efficiency and reducing maintenance complexity.

The term "floats" refers specifically to elongated, sealed pipes made from plastics materials suitable for prolonged exposure to aquatic environments. These materials include polyethylene, polypropylene, polyvinyl chloride (PVC), acrylonitrile-butadiene-styrene (ABS), polylactic acid (PLA), polymethyl methacrylate (PMMA), or polycarbonate, preferably containing UV stabilizers. The chosen materials offer significant technical advantages such as resistance to moisture, ultraviolet radiation, mechanical stress, and environmental degradation, thereby prolonging the platform's usability and operational life.

Preferably, the platform employs at least five parallel floats, enhancing stability, buoyancy, and structural integrity during plant cultivation. The ends of these floats are flattened and welded, which simplifies the formation of the through-holes and ensures reliable sealing, thus maintaining consistent buoyancy. Each bar is similarly constructed from weather-resistant plastics pipes, sealed at both ends, ensuring robustness and durability during prolonged water exposure.

Preferably, the bars are also constructed from plastics materials such as polyethylene, polypropylene, polyvinyl chloride (PVC), acrylonitrile-butadiene-styrene (ABS), polylactic acid (PLA), polymethyl methacrylate (PMMA), or polycarbonate, optionally including UV stabilizers. These materials provide reliable structural integrity, weather resistance, and ease of handling. Further preferred is the incorporation of spacers positioned between adjacent floats on at least one bar, locking their spacing and enhancing structural rigidity, simplifying maintenance and plant handling operations.

In another aspect, the invention is defined by claim 8 facilitating efficient and reliable plant cultivation.

Preferably, plant propagules utilized in this method include species such as osier (Salix viminalis), white willow (Salix alba L.), common reed (Phragmites australis), reed canary grass (Phalaris arundinacea), and plants from the genus Typha, notably narrow-leaved cattail (Typha angustifolia), broad-leaved cattail (Typha latifolia), or their hybrid (Typha × glauca). These species exhibit superior adaptability, rapid growth, efficient rooting capabilities, and effective nutrient absorption from water, significantly enhancing the environmental remediation capabilities of the cultivation process.

Preferably, propagules extend across multiple parallel platforms, providing additional structural stability during cultivation. Further preferred is the coupling of multiple platforms using ropes or connectors, substantially increasing their stability and operational reliability, especially under varying aquatic environmental conditions.

These and other features, aspects and advantages of the invention will become better understood with reference to the following drawings, descriptions and claims.

### BRIEF DESCRIPTION OF DRAWINGS

The invention is illustrated through example embodiments in the drawings, in which:

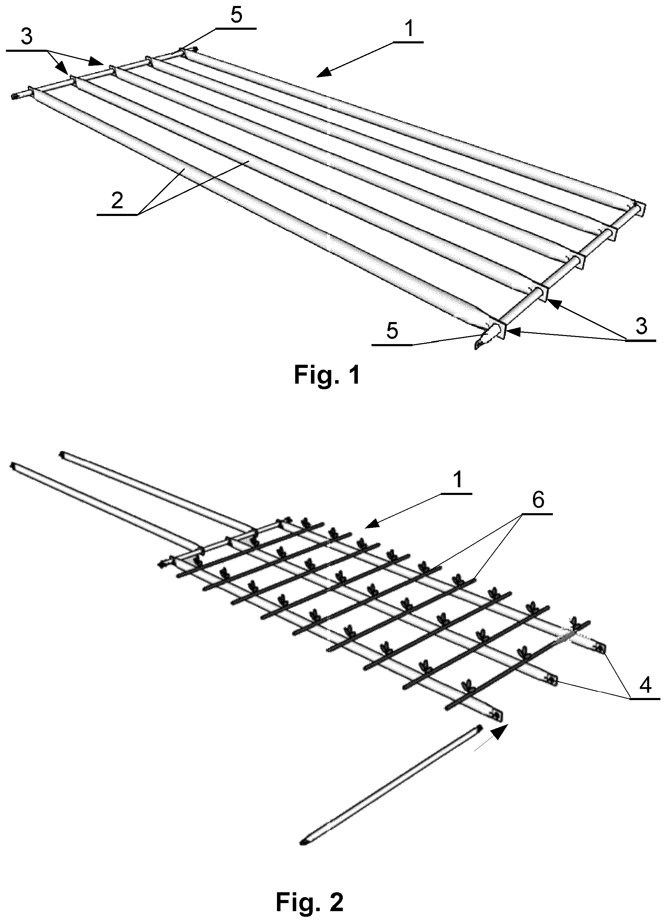

Fig. 1 shows the platform in a closed configuration without plants;
Fig. 2 shows the platform in an open configuration with longitudinal plant propagules arranged on it;
Fig. 3 shows the platform in a closed configuration with longitudinal plant propagules secured in place;
Fig. 4 shows a detailed fragment of the platform showing the retaining element on the bar;

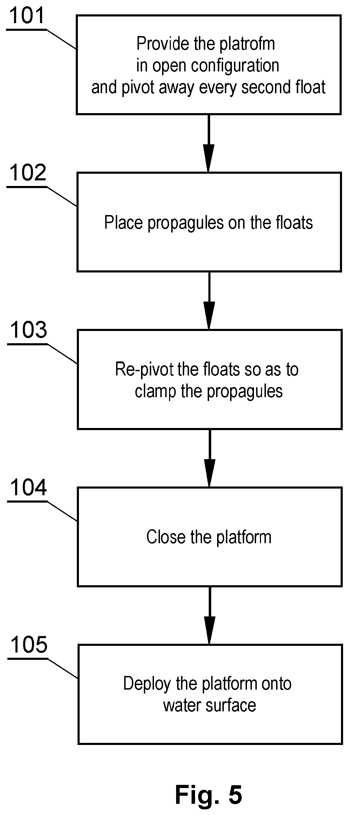

Fig. 5 shows the steps involved in the method of cultivating plants according to the invention.

### DETAILED DESCRIPTION

The following detailed description is of the best currently contemplated modes of carrying out the invention. The description is not to be taken in a limiting sense, but is made merely for the purpose of illustrating the general principles of the invention.

The subject of the invention is a platform 1 for cultivating plants on the surface of water. The platform is suitable for cultivating plants both on standing bodies of water and flowing watercourses. The platform comprises at least three floats 2, arranged substantially parallel to each other, and two bars 5. The floats 2 are constructed from weather-resistant plastics pipes with closed ends 3. These floats provide appropriate buoyancy for the platform 1 and function as support and stabilizing elements for the plants grown on the platform. Pipes made from weather-resistant plastics, preferably polyethylene, are widely available commercially. Sealing the ends 3 of the floats 2 ensures they remain watertight and maintain buoyancy. Various sealing methods are known in the prior art; however, a particularly preferred solution involves flattening and welding the ends 3 of the pipes. This technique simplifies sealing and enables the creation of tight through-holes 4 in the welded sections, preventing water ingress into the floats 2.

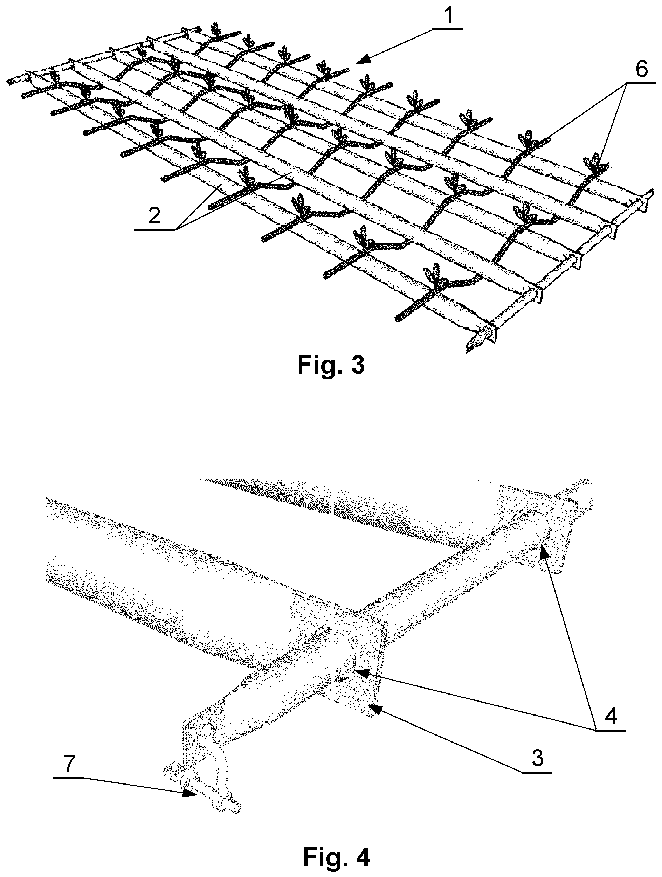

All floats 2 are of identical length, ensuring correct positioning relative to each other. At the sealed ends 3 of the floats, through-holes 4 are created in a manner that prevents water from entering the float interiors. Additionally, the platform includes two bars 5 whose lengths exceed the total diameters of the floats 2, while their diameters are smaller than the through-holes 4 at the float ends 3. At each bar 5 end, a retaining element 7 prevents the bar from sliding out of the hole 4. This retaining element 7 should be detachable on at least one side to allow insertion of the bar 5 through the float holes 4. In detachable form, the retaining element 7 may be, for example, a cotter pin or shackle (as shown in Fig. 4. In a non-detachable form, which can also be provided on one side of the bar 5, it could be an extension wider than the hole diameter or an attached perpendicular piece preventing the bar from sliding through.

The platform 1 can adopt two fundamental configurations. In the closed configuration, one bar 5 passes through holes 4 on one side of the parallel floats 2, and the second bar 5 passes through holes 4 on the opposite side, with each bar's ends secured to prevent detachment. In this configuration, the floats 2 securely hold plants 6 placed between them, which is the operational configuration for cultivating plants on water. The second configuration of the platform 1 is the open configuration, wherein one of the bars 5 is removed from the float holes 4, allowing floats 2 to pivot around the remaining bar 5. This configuration is used for loading or harvesting plants 6.

The platform 1 is especially suited for cultivating plants 6 starting from rootable propagules, preferably rhizomes, roots, stems, or branches. Such propagules can be placed on selected floats 2 and pressed into place by pivoting the other floats 2, thereby achieving stable positioning. Upon completion of cultivation, the platform 1 is opened, allowing easy removal of plants 6 without damage to any platform components.

Preferably, floats 2 are made from polyethylene, which exhibits excellent resistance to moisture, UV radiation, high strength, and low weight. Moisture resistance ensures durability when floating on water. UV resistance prolongs structural integrity during prolonged sun exposure. High strength minimizes the risk of damage from plants or collisions with objects on the water. Low weight further enhances usability. Polyethylene is environmentally advantageous due to its recyclability and low environmental impact when incinerated. Alternatively, floats 2 may be constructed from other plastics such as polypropylene or UV-stabilized PVC, offering similar beneficial properties.

Preferably, the platform 1 includes at least five floats 2, providing high stability and buoyancy. Flattened and welded float ends 3 with through-holes 4 simplify sealing and hole creation. The bars 5 are preferably weather-resistant plastics pipes with closed ends, also made from polyethylene, polypropylene, or UV-stabilized PVC. The float positions on the bars 5 can be stabilized using spacers placed between them, further enhancing structural rigidity and operational ease.

The invention also includes a method for cultivating plants on water surfaces utilizing the described platform 1. Initially, the platform 1 in its open configuration is placed 101 on a flat surface, and every second float 2 is pivoted away. Rootable propagules 6, preferably rhizomes, roots, stems, or branches, are then placed 102 across the stationary floats 2. Subsequently, the pivoted floats 2 are repositioned 103 over the propagules. The configuration is secured 104 by inserting a bar 5 through the aligned float holes 4 and fastening it with retaining elements 7. Finally, the assembled platform 1, containing the propagules 6, is placed 105 onto the water surface.

Preferred plant propagules for this method include species such as osier (Salix viminalis), white willow (Salix alba L.), common reed (Phragmites australis), reed canary grass (Phalaris arundinacea), and Typha genus plants, particularly narrow-leaved cattail (Typha angustifolia), broad-leaved cattail (Typha latifolia), or their hybrid (Typha × glauca). These species are characterized by rapid growth, effective rooting in hydroponic conditions, and efficient water pollutant absorption.

Multiple platforms 1 can be used simultaneously, allowing propagules 6 to extend across parallel platforms for additional stability. Platforms may also be interconnected using ropes or clamps for enhanced structural integrity and stability during cultivation.

### EXAMPLE - cultivation of white willow (Salix alba L.)

The platform 1 designed for cultivating plants on water surfaces, according to the invention, was prepared using polyethylene pipes with a diameter of 11 cm and a length of 500 cm as floats 2. The ends 3 of these floats were flattened and welded. Through-holes 4 with a diameter of 6 cm were made in the welded sections approximately 2.5 cm from each pipe end. Five floats 2 were produced, providing a buoyancy of approximately 180 kg.

Polyethylene pipes measuring 250 cm in length and 5 cm in diameter, with sealed ends, were used as bars 5. Through-holes 4 were drilled at the ends of the bars 5 to accommodate retaining elements 7 in the form of shackles, ensuring the bars remained securely positioned after insertion through the float holes 4.

The platform 1, prepared in this manner, was employed for cultivating white willow (Salix alba L.) on the surface of a water reservoir. White willow exhibits strong growth characteristics when cultivated in water, effectively absorbing substantial nutrients from the water and thus contributing to water purification. Additionally, the rapid growth rate of white willow makes it highly suitable for such cultivation methods.

To initiate cultivation, one of the bars 5 was inserted through the aligned through-holes 4 of all five floats 2, and its ends were secured using the retaining elements 7, preventing accidental removal. This created an open configuration of the platform 1, which was then positioned 101 on the ground or alternatively directly on the water surface. Every second float 2 was pivoted away from the adjacent floats, creating gaps approximately 50 cm wide, though maintaining precisely equal spacing was not critical.

Next, willow propagules 102, in the form of twigs approximately 300 cm in length-longer than the width of the platform 1-were placed across the stationary floats 2. The twigs were distributed along the full length of the floats at intervals of about 60 cm. This ensured optimal plant density and ultimately an adequate yield.

After arranging the propagules, the previously pivoted floats 2 were repositioned 103 to securely press and stabilize the willow twigs. The platform 1 was then closed 104 by inserting the second bar 5 through the vacant through-holes 4 of the floats 2 and securing it with retaining elements 7. The closure stabilized the entire structure, creating tension between the floats 2 and willow twigs, effectively restricting their relative movement.

The fully assembled platform 1, now containing the willow propagules 6, was placed 105 on the surface of the water reservoir. Cultivation proceeded for at least one full growth season, resulting in approximately 50 kg of biomass (fresh weight). This biomass was associated with the uptake of approximately 0.13 kg of nitrogen (N) and 0.05 kg of phosphorus (P) from the water.

Upon completion of the cultivation period, the platform 1 was opened by removing one of the bars 5. Subsequently, every second float 2 was pivoted away once more, allowing straightforward removal of the cultivated biomass. Due to the design described in the invention, plant removal was simple and did not cause damage to any platform components. After cleaning, the platform 1 could readily be reloaded with new plants 6 and reused for subsequent cultivation cycles on the water surface.

While the invention has been described with respect to a limited number of embodiments, it will be appreciated that many variations, modifications and other applications of the invention may be made. In conclusion, the invention is defined by the claims.

## Claims

1. A platform (1) for cultivating plants on a water surface, comprising
- at least three elongate, watertight floats (2) disposed substantially parallel to one another, each float being a plastics pipe closed at both ends (3);
- a through-hole (4) provided at each end (3) of every float (2), the through-hole being configured such that water is prevented from entering the interior of the float (2); and
- two bars (5), each having:
- a length exceeding the sum of the diameters of the floats (2),
- a diameter smaller than the through-holes (4), and
- at each opposite end, a retaining element (7) configured to inhibit unintentional withdrawal of the bar (5) from the through-holes (4);
- wherein the platform is switchable between:
- a closed configuration, in which a first bar (5) passes through the through-holes (4) at a first end of the parallel floats (2) and a second bar (5) passes through the through-holes (4) at the opposite end of the floats, both bars being secured by the respective retaining elements (7) so that the floats are fixed against pivotal movement; and
- an open configuration, in which one of the bars (5) is removed from the through-holes (4), thereby permitting the floats (2) to pivot about the other bar (5) that remains in place.

2. The platform of claim 1, wherein the floats (2) are formed of a plastics material selected from polyethylene, polypropylene, poly(vinyl chloride) (PVC), acrylonitrile-butadiene-styrene (ABS), polylactic acid (PLA), polymethyl methacrylate (PMMA) and polycarbonate, optionally containing a UV stabilizer.

3. The platform of claim 1 or 2, comprising at least five floats (2).

4. The platform of any one of claims 1 to 3, wherein each float end (3) is flattened and welded, the through-hole (4) being formed in the flattened and welded region.

5. The platform of any one of claims 1 to 4, wherein each bar (5) is a weather-resistant plastics pipe closed at both ends.

6. The platform of claim 5, wherein the bar (5) is formed of a plastics material selected from polyethylene, polypropylene, poly(vinyl chloride) (PVC), acrylonitrile-butadiene-styrene (ABS), polylactic acid (PLA), polymethyl methacrylate (PMMA) and polycarbonate, optionally containing a UV stabilizer.

7. The platform of any one of claims 1 to 6, further comprising spacers positioned between adjacent floats (2) on at least one of the bars (5) so as to lock the mutual spacing of the floats.

8. A method of cultivating plants on a water surface, the method comprising the steps of:
- providing a platform (1) according to any one of claims 1 to 7 in the open configuration on a substantially flat supporting surface;
- pivoting every second float (2) away from the remaining floats;
- placing rootable plant propagules (6) on the floats (2) that remain in place;
- re-pivoting the previously pivoted floats (2) so that parts of the propagules (6) are clamped between adjacent floats;
- inserting the removed bar (5) through the aligned through-holes (4) of all floats (2) and securing the bar by means of the retaining elements (7) so as to place the platform (1) in the closed configuration; and
- deploying the closed platform (1) bearing the propagules (6) onto the water surface.

9. The method of claim 8, wherein the propagules (6) are rhizomes, roots, stems or branches.

10. The method of claim 8 or 9, wherein the propagules (6) are of one or more plant species selected from: Salix viminalis (osier), Salix alba L. (white willow), Phragmites australis (common reed), Phalaris arundinacea (reed canary grass) and plants of the genus Typha, preferably Typha angustifolia (narrow-leaved cattail), Typha latifolia (broad-leaved cattail) or the hybrid Typha × glauca.

11. The method of any one of claims 8 to 10, wherein the propagules (6) extend across at least two platforms (1) arranged substantially parallel to one another.

12. The method of any one of claims 8 to 11, wherein at least two platforms (1) are connected to one another by couplers or ropes during cultivation.

## Patentansprüche

1. Plattform (1) zum Anbau von Pflanzen auf einer Wasseroberfläche, umfassend
- mindestens drei längliche, wasserdichte Schwimmer (2), die im Wesentlichen parallel zueinander angeordnet sind, wobei jeder Schwimmer ein an beiden Enden (3) verschlossenes Kunststoffrohr ist;
- ein an jedem Ende (3) jedes Schwimmers (2) vorgesehenes Durchgangsloch (4), wobei das Durchgangsloch so ausgebildet ist, dass verhindert wird, dass Wasser in das Innere des Schwimmers (2) eindringt; und
- zwei Stangen (5), die jeweils aufweisen:
- eine Länge, die die Summe der Durchmesser der Schwimmer (2) übersteigt,
- einen Durchmesser, der kleiner ist als die Durchgangslöcher (4), und
- an jedem gegenüberliegenden Ende ein Halteelement (7), das so ausgebildet ist, dass ein unbeabsichtigtes Herausziehen der Stange (5) aus den Durchgangslöchern (4) verhindert wird;
- wobei die Plattform umschaltbar ist zwischen:
- einer geschlossenen Konfiguration, in der eine erste Stange (5) durch die Durchgangslöcher (4) an einem ersten Ende der parallelen Schwimmer (2) geführt ist und eine zweite Stange (5) durch die Durchgangslöcher (4) am gegenüberliegenden Ende der Schwimmer geführt ist, wobei beide Stangen durch die jeweiligen Halteelemente (7) gesichert sind, sodass die Schwimmer gegen eine Schwenkbewegung fixiert sind; und
- einer offenen Konfiguration, in der eine der Stangen (5) aus den Durchgangslöchern (4) entfernt ist, wodurch sich die Schwimmer (2) um die andere, an Ort und Stelle verbleibende Stange (5) schwenken können.

2. Plattform nach Anspruch 1, wobei die Schwimmer (2) aus einem Kunststoffmaterial bestehen, das aus Polyethylen, Polypropylen, Poly(vinylchlorid) (PVC), Acrylnitril-Butadien-Styrol (ABS), Polymilchsäure (PLA), Polymethylmethacrylat (PMMA) und Polycarbonat ausgewählt ist und gegebenenfalls einen UV-Stabilisator enthält.

3. Plattform nach Anspruch 1 oder 2, umfassend mindestens fünf Schwimmer (2).

4. Plattform nach einem der Ansprüche 1 bis 3, wobei jedes Schwimmerende (3) abgeflacht und verschweißt ist, wobei das Durchgangsloch (4) in dem abgeflachten und verschweißten Bereich ausgebildet ist.

5. Plattform nach einem der Ansprüche 1 bis 4, wobei jede Stange (5) ein witterungsbeständiges, an beiden Enden verschlossenes Kunststoffrohr ist.

6. Plattform nach Anspruch 5, wobei die Stange (5) aus einem Kunststoffmaterial gebildet ist, das aus Polyethylen, Polypropylen, Poly(vinylchlorid) (PVC), Acrylnitril-Butadien-Styrol (ABS), Polymilchsäure (PLA), Polymethylmethacrylat (PMMA) und Polycarbonat ausgewählt ist und gegebenenfalls einen UV-Stabilisator enthält.

7. Plattform nach einem der Ansprüche 1 bis 6, die ferner Abstandshalter umfasst, die zwischen benachbarten Schwimmern (2) an mindestens einer der Stangen (5) angeordnet sind, um den gegenseitigen Abstand der Schwimmer zu fixieren.

8. Verfahren zum Anbau von Pflanzen auf einer Wasseroberfläche, wobei das Verfahren die folgenden Schritte umfasst:
- Bereitstellen einer Plattform (1) nach einem der Ansprüche 1 bis 7 in der offenen Konfiguration auf einer im Wesentlichen ebenen Auflagefläche;
- Schwenken jedes zweiten Schwimmers (2) weg von den verbleibenden Schwimmern;
- Platzieren von bewurzelbaren Pflanzenvermehrungsorganen (6) auf den Schwimmern (2), die an Ort und Stelle verbleiben;
- Zurückschwenken der zuvor weggeschwenkten Schwimmer (2), so dass Teile der Vermehrungsorgane (6) zwischen benachbarten Schwimmern eingeklemmt werden;
- Einführen der entfernten Stange (5) durch die ausgerichteten Durchgangslöcher (4) aller Schwimmer (2) und Befestigen der Stange mittels der Halteelemente (7), um die Plattform (1) in die geschlossene Konfiguration zu bringen; und
- Absetzen der geschlossenen Plattform (1) mit den Vermehrungsorganen (6) auf die Wasseroberfläche.

9. Verfahren nach Anspruch 8, wobei die Vermehrungsorgane (6) Rhizome, Wurzeln, Stängel oder Zweige sind.

10. Verfahren nach Anspruch 8 oder 9, wobei die Vermehrungsorgane (6) einer oder mehrerer Pflanzenarten angehören, ausgewählt aus: Salix viminalis (Korbweide), Salix alba L. (Silber-Weide), Phragmites australis (Schilf), Phalaris arundinacea (Rohrglanzgras) und Pflanzen der Gattung Typha, vorzugsweise Typha angustifolia (Schmalblättriger Rohrkolben), Typha latifolia (Breitblättriger Rohrkolben) oder die Hybride Typha × glauca.

11. Verfahren nach einem der Ansprüche 8 bis 10, wobei sich die Vermehrungsorgane (6) über mindestens zwei im Wesentlichen parallel zueinander angeordnete Plattformen (1) erstrecken.

12. Verfahren nach einem der Ansprüche 8 bis 11, wobei während des Anbaus mindestens zwei Plattformen (1) durch Kupplungen oder Seile miteinander verbunden sind.

## Revendications

1. Plateforme (1) destinée à la culture de plantes à la surface de l'eau, comprenant
- au moins trois flotteurs allongés et étanches (2) disposés sensiblement parallèlement les uns aux autres, chaque flotteur étant un tube en matière plastique fermé à ses deux extrémités (3) ;
- un trou traversant (4) prévu à chaque extrémité (3) de chaque flotteur (2), le trou traversant étant configuré de sorte que l'eau soit empêchée de pénétrer à l'intérieur du flotteur (2) ; et
- deux barres (5), chacune présentant :
- une longueur supérieure à la somme des diamètres des flotteurs (2),
- un diamètre inférieur à celui des trous traversants (4), et
- à chacune de ses extrémités opposées, un élément de retenue (7) configuré pour empêcher le retrait involontaire de la barre (5) hors des trous traversants (4) ;
- la plateforme pouvant prendre l'une des configurations suivantes :
- une configuration fermée, dans laquelle une première barre (5) passe à travers les trous traversants (4) à une première extrémité des flotteurs parallèles (2) et une seconde barre (5) passe à travers les trous traversants (4) à l'extrémité opposée des flotteurs, les deux barres étant fixées par les éléments de retenue respectifs (7) de sorte que les flotteurs sont empêchés de pivoter ; et
- une configuration ouverte, dans laquelle l'une des barres (5) est retirée des trous traversants (4), permettant ainsi aux flotteurs (2) de pivoter autour de l'autre barre (5) qui reste en place.

2. Plateforme selon la revendication 1, dans laquelle les flotteurs (2) sont constitués d'une matière plastique choisie parmi le polyéthylène, le polypropylène, le poly(chlorure de vinyle) (PVC), l'acrylonitrile-butadiène-styrène (ABS), l'acide polylactique (PLA), le polyméthacrylate de méthyle (PMMA) et le polycarbonate, contenant éventuellement un stabilisateur UV.

3. Plateforme selon la revendication 1 ou 2, comprenant au moins cinq flotteurs (2).

4. Plateforme selon l'une quelconque des revendications 1 à 3, dans laquelle chaque extrémité de flotteur (3) est aplatie et soudée, le trou traversant (4) étant formé dans la zone aplatie et soudée.

5. Plateforme selon l'une quelconque des revendications 1 à 4, dans laquelle chaque barre (5) est un tube en matière plastique résistant aux intempéries et fermé à ses deux extrémités.

6. Plateforme selon la revendication 5, dans laquelle la barre (5) est constituée d'une matière plastique choisie parmi le polyéthylène, le polypropylène, le poly(chlorure de vinyle) (PVC), l'acrylonitrile-butadiène-styrène (ABS), l'acide polylactique (PLA), le polyméthacrylate de méthyle (PMMA) et le polycarbonate, contenant éventuellement un stabilisateur UV.

7. Plateforme selon l'une quelconque des revendications 1 à 6, comprenant en outre des entretoises positionnées entre des flotteurs adjacents (2) sur au moins l'une des barres (5) de manière à verrouiller l'espacement mutuel des flotteurs.

8. Procédé de culture de plantes à la surface de l'eau, le procédé comprenant les étapes suivantes :
- fournir une plateforme (1) selon l'une quelconque des revendications 1 à 7 en configuration ouverte sur une surface de support sensiblement plane ;
- faire pivoter un flotteur (2) sur deux à l'écart des flotteurs restants ;
- placer des propagules végétales aptes à l'enracinement (6) sur les flotteurs (2) qui restent en place ;
- faire pivoter à nouveau les flotteurs (2) précédemment pivotés de sorte que des parties des propagules (6) soient serrées entre des flotteurs adjacents ;
- insérer la barre retirée (5) à travers les trous traversants alignés (4) de tous les flotteurs (2) et fixer la barre au moyen des éléments de retenue (7) de manière à placer la plateforme (1) en configuration fermée ; et
- déployer la plateforme fermée (1) portant les propagules (6) à la surface de l'eau.

9. Procédé selon la revendication 8, dans lequel les propagules (6) sont des rhizomes, des racines, des tiges ou des branches.

10. Procédé selon la revendication 8 ou 9, dans lequel les propagules (6) appartiennent à une ou plusieurs espèces végétales choisies parmi : Salix viminalis (osier), Salix alba L. (saule blanc), Phragmites australis (roseau commun), Phalaris arundinacea (alpiste roseau) et des plantes du genre Typha, de préférence Typha angustifolia (massette à feuilles étroites), Typha latifolia (massette à feuilles larges) ou l'hybride Typha × glauca.

11. Procédé selon l'une quelconque des revendications 8 à 10, dans lequel les propagules (6) s'étendent sur au moins deux plateformes (1) disposées sensiblement parallèlement l'une à l'autre.

12. Procédé selon l'une quelconque des revendications 8 à 11, dans lequel au moins deux plateformes (1) sont reliées l'une à l'autre par des connecteurs ou des cordes pendant la culture.
